# EUROPÄISCHE PATENTSCHRIFT

(11) **EP 3 367 495 B1**
(45) Veröffentlichungstag und Bekanntmachung des Hinweises auf die Patenterteilung: **06.04.2022**
(21) Anmeldenummer: 18156784.3
(22) Anmeldetag: 14.02.2018
(51) Int. Cl.: H01M 10/617, H01M 10/625, H01M 10/63, H01M 10/663, H01M 10/6563, H01M 50/20, B60K 11/06, B60H 1/14, B60K 1/04, B60H 1/00

(54) **VORRICHTUNG ZUM TEMPERIEREN EINER TRAKTIONSBATTERIE**
DEVICE FOR CONTROLLING THE TEMPERATURE OF A TRACTION BATTERY
DISPOSITIF DE MISE EN TEMPÉRATURE D'UNE BATTERIE DE TRACTION

(30) Priorität: 25.02.2017 DE 102017001848
(43) Veröffentlichungstag der Anmeldung: 29.08.2018
(73) Patentinhaber: MAN Truck & Bus SE, 80995 München (DE)
(72) Erfinder: Hubert, Markus, 81247 München (DE); Braun, Reimar, 81735 München (DE)
(74) Vertreter: v. Bezold & Partner Patentanwälte - PartG mbB

(56) Entgegenhaltungen:
- EP-A2- 2 565 560
- WO-A1-2015/091969
- DE-A1-102013 021 360
- DE-A1-102015 101 186
- Anonymous: "Mercedes Citaro G BlueTec Hybrid", Omnibus-Infos - Mercedes-Benz , 7. August 2009 (2009-08-07), XP002780945, Gefunden im Internet: URL:http://www.omnibusarchiv.de/include.ph p?path=content&mode=print&contentid=269 [gefunden am 2018-05-09]

## Beschreibung

Die Erfindung betrifft eine Vorrichtung zum Temperieren einer Batterie eines Kraftfahrzeugs, insbesondere einer Traktionsbatterie eines Hybridfahrzeug oder eines Elektrofahrzeugs. Die Erfindung betrifft ferner ein Kraftfahrzeug, vorzugsweise ein Omnibus, mit einer Vorrichtung zum Temperieren einer Batterie.

Die vergrößerte Kapazität von Batterien von Hybrid- und Elektrofahrzeugen führt zu einer größeren Abwärme der Batterien. Derartige Batterien, die auch als Traktionsbatterien bezeichnet werden, benötigen typischerweise eine Kühlvorrichtung. Die Kühlvorrichtung sorgt dafür, dass die Temperatur der Batteriezellen der Batterie in einem gewünschten Temperaturbereich bleibt. Im Stand der Technik ist eine Vielzahl von Vorrichtungen zur Kühlung von Batterien bekannt. Beispielhafte Kühlvorrichtungen sind in der DE 44 08 960 C1, der DE 10 2009 059 982 A1 und der DE 10 2007 004 979 A1 offenbart.

Vorrichtungen zum Temperieren von Fahrzeugbatterien sind bspw. in der DE 10 2013 021360 A1, der WO 2015/091969 A1 und der DE 10 2015 101186 A1 offenbart.

Insbesondere bei Nutzfahrzeugen, die als Hybridfahrzeug- oder Elektrofahrzeug konzipiert sind, können ein Batteriemodul, ein Batteriekühlungsmodul und ein Klimaanlagenmodul auf einem Dach des Nutzfahrzeuges einzeln montiert werden. Ein Beispiel für ein derartiges Nutzfahrzeug ist ein Omnibus. Das Batteriemodul kann durch einen Niedertemperatur-Kühlkreislauf und einen zuschaltbaren Kältekreislauf des Batteriekühlungsmoduls gekühlt werden. Der Kältekreislauf weist einen Verdichter und einen Kondensator auf. Der Kältekreislauf wird zugeschaltet, wenn der Niedertemperatur-Kühlkreislauf keine ausreichende Kühlleistung zur Kühlung des Batteriemoduls erzeugt. Die Einschaltung des Kältekreislaufes ist jedoch vergleichsweise energieintensiv, sodass die Einschaltung des Kältekreislaufes insbesondere bei reinen Elektrofahrzeugen so weit wie möglich hinausgezögert werden sollte. Außerdem befinden sich im Kältekreislauf vergleichsweise aufwendige und teure Komponenten, deren Benutzung und somit Verschleiß möglichst gering gehalten werden sollte.

Der Erfindung liegt somit die Aufgabe zugrunde, eine Vorrichtung zur Temperierung einer Batterie zu verbessern. Der Erfindung liegt ferner insbesondere die Aufgabe zugrunde, eine Vorrichtung zur Temperierung einer Batterie derartig zu verbessern, dass der Kältekreislauf seltener zugeschaltet werden muss.

Diese Aufgaben werden durch eine Vorrichtung zum Temperieren einer Batterie mit den Merkmalen des unabhängigen Anspruchs gelöst. Vorteilhafte Ausführungsformen und Anwendungen der Erfindung ergeben sich aus den abhängigen Ansprüchen.

Die Vorrichtung zum Temperieren einer Batterie eines Kraftfahrzeugs, insbesondere einer Traktionsbatterie eines Hybridfahrzeugs oder eines Elektrofahrzeugs, weist eine Klimaanlage zum Erzeugen eines temperierten Luftstroms zum Temperieren eines Fahrzeuginnenraums des Kraftfahrzeugs auf. Die Vorrichtung weist ferner einen Kühlkreislauf auf. Der Kühlreislauf umfasst einen ersten Wärmeübertrager zum Wärmeaustausch mit der Batterie. Der Kühlkreislauf umfasst zudem einen zweiten Wärmeübertrager, der zum Wärmeaustauch mit einer Umgebung der Vorrichtung angeordnet ist. Der Kühlkreislauf weist ferner einen dritten Wärmeübertrager auf, der zum Wärmeaustausch mit dem temperierten Luftstrom angeordnet ist.

Die Vorrichtung ermöglicht eine alternative oder kombinierte Kühlung der Batterie durch den zweiten und den dritten Wärmeübertrager. Einerseits kann mit der Umgebungsluft durch den zweiten Wärmeübertrager gekühlt werden. Alternativ oder zusätzlich kann mit dem von der Klimaanlage temperierten Luftstrom durch den dritten Wärmeübertrager gekühlt werden. Damit kann eine Kühlleistung zur Kühlung der Batterie verbessert werden. Zusätzlich besteht eine Redundanz im System, sodass trotz eines Ausfalls des zweiten oder dritten Wärmeübertragers, weiterhin eine Kühlung der Batterie durch den Kühlkreislauf mittels des noch funktionsfähigen Wärmeübertragers gewährleistet ist.

Hierin wird unter einer Klimaanlage eine Anlage verstanden, die dazu ausgebildet ist, einen Fahrzeuginnenraum eines Fahrzeugs zu temperieren, insbesondere zu kühlen. Die Klimaanlage kann dazu einen gekühlten Luftstrom erzeugen. In einigen Ausführungsformen kann die Klimaanlage die Lufttemperatur zusätzlich erwärmen bzw. einen erwärmten Luftstrom erzeugen oder weitergeben. Dies kann einerseits über eine in der Klimaanlage integrierte Heizvorrichtung oder über eine der Klimaanlage zugeordnete Heizung des Fahrzeugs geschehen.

Vorzugsweise weist die Vorrichtung ferner einen Kältekreislauf auf. Im Kältekreislauf findet eine Aggregatzustandsänderung des im Kältekreislauf geführten Kühlmittels statt. Der Kältekreislauf ist insbesondere separat von der Klimaanlage des Kraftfahrzeugs vorgesehen. Der Kältekreislauf weist vorzugsweise einen Verdichter, einen Kondensator und/oder ein Expansionsventil auf. Ein vierter Wärmeübertrager koppelt den Kältekreislauf und den Kühlkreislauf thermisch miteinander. Die Integration des Kältekreislaufes ermöglicht eine effiziente Kühlung der Batterie, wenn die Kühlleistung durch den zweiten und/oder den dritten Wärmeübertrager nicht ausreicht. Wenn beispielsweise eine Steuereinheit erfasst, dass eine Temperatur der Batterie einen oberen Temperaturschwellwert überschreitet, so kann der Kältekreislauf zur Kühlung der Batterie zum Beispiel durch Einschalten des Verdichters zugeschaltet werden. Der Kältekreislauf kann dann alternativ oder zusätzlich zu dem zweiten und/oder dritten Wärmeübertrager das Kühlmittel im Kühlkreislauf kühlen.

In einem Ausführungsbeispiel sind der zweite Wärmeübertrager, der dritte Wärmeübertrager und/oder der vierte Wärmeübertrager parallel zueinander geschaltet. Das Kühlmittel des Kühlkreislaufs, z.B. ein Wasser-Glykol-Gemisch, kann somit auf einfache Weise gezielt zu dem jeweils gewünschten Wärmeübertrager geleitet werden. Zudem wird insbesondere eine alternative Benutzung der Wärmeübertragung zum Kühlen des Kühlmittels oder eine Aufteilung des Kühlmittels auf die verschiedenen Wärmeübertrager ermöglicht.

Alternativ ist auch eine Reihenschaltung des zweiten, dritten und/oder vierten Wärmeübertragers möglich, bei der vorzugsweise steuerbare Bypässe zum Umgehen eines oder mehrerer Wärmeübertrager vorgesehen werden können.

In einem weiteren Ausführungsbeispiel ist der zweite Wärmeübertrager und/oder der dritte Wärmeübertrager als ein Niedertemperatur-Kühler (Kühler ohne Aggregatzustandsänderung des Kühlmittels) oder ein Radiator ausgebildet. Alternativ oder zusätzlich ist der zweite Wärmeübertrager und/oder der dritte Wärmeübertrager ein luftgekühlter Wärmeübertrager. Dies ermöglicht einen Aufbau des Kühlkreislaufs mit vergleichsweise einfach konstruierten Komponenten.

In einer Ausführungsform weist die Vorrichtung ferner einen Strömungskanal zum Führen des temperierten Luftstroms auf. Der Strömungskanal ist mit einer Ausströmungsöffnung der Klimaanlage verbunden. Der dritte Wärmeübertrager ist in dem Strömungskanal angeordnet. Die direkte Anordnung des dritten Wärmeübertragers in einem mit dem Klimaanlage verbundenen Strömungskanal ermöglicht, dass der Luftstrom aus der Klimaanlage gezielt zum Wärmeaustausch mit dem dritten Wärmeübertrager verwendet werden kann.

Beispielsweise kann der dritte Wärmeübertrager möglichst dicht an der Ausströmungsöffnung der Klimaanlage in dem Strömungskanal angeordnet sein. Zum Beispiel kann ein Abstand zwischen dem dritten Wärmeübertrager und der Ausströmungsöffnung der Klimaanlage weniger als 2 m, 1 m oder 0,5 m betragen.

Vorzugsweise ist der Kühlkreislauf ein Niedertemperatur-Kühlkreislauf ohne Aggregatzustandsänderung eines in dem Kühlkreislauf geführten Kühlmittels. Dies ermöglicht einerseits einen Aufbau mit vergleichsweise einfach konstruierten Komponenten und andererseits einen energiearmen Betrieb.

In einem weiteren Ausführungsbeispiel weist der Kühlkreislauf ferner eine Steuerventileinheit auf. Die Steuerventileinheit kann insbesondere ein 4/3-Wegeventil sein oder zwei in Reihe geschaltete 3/2-Wegeventile aufweisen. In einer ersten Stellung leitet die Steuerventileinheit einen Kühlmittelstrom vollständig zu dem zweiten Wärmeübertrager. In einer zweiten Stellung wird ein Kühlmittelstrom vollständig zu dem dritten Wärmeübertrager geleitet. In einer dritten Stellung wird ein Kühlmittelstrom vollständig zu dem vierten Wärmeübertrager geleitet. Die Steuerventileinheit ermöglicht eine gezielte Zuleitung des Kühlmittels zu dem jeweils gewünschten Wärmeübertrager. Somit kann die Kühlleistung dem Kühlbedarf angepasst werden. Alternativ oder zusätzlich kann eine Steuereinheit vorgesehen sein, die den Kältekreislauf einschalten und ausschalten kann. Der Kältekreislauf kann beispielsweise durch Einschalten des Verdichters des Kältekreislaufes eingeschaltet werden.

Beispielsweise kann die Steuerventileinheit als Schaltventileinheit mit diskreter Verstellung zwischen den Stellungen, als Stetigventileinheit mit kontinuierlicher Verstellung zwischen den Stellungen oder als kombinierte Schaltventil- und Stetigventileinheit ausgebildet sein. Die Konfiguration als Schaltventileinheit ermöglicht einen einfachen Aufbau, wohingegen die Konfiguration als Stetigventileinheit eine Vielzahl von Steuerungsmöglichkeiten bereitstellt. So kann beispielsweise das Kühlmittel sowohl zu dem zweiten Wärmeübertrager als auch dem dritten Wärmeübertrager (und optional zusätzlich zu dem vierten Wärmeübertrager) übertragen werden, um einen Kühlbedarf auf mehrere Wärmeübertrager aufzuteilen.

In einer Ausführungsvariante ist die Steuereinheit dazu ausgebildet, die Steuerventileinheit zum Einnehmen der zweiten Stellung oder zum Verstellen in Richtung zu der zweiten Stellung anzusteuern, wenn die Steuerventileinheit in der ersten Stellung ist und die Klimaanlage zum Ausgeben eines gekühlten Luftstroms eingeschaltet oder umgeschaltet wird. Alternativ oder zusätzlich wird die Steuerventileinheit zum Einnehmen der zweiten Stellung oder zum Verstellen in Richtung zu der zweiten Stellung angesteuert, wenn die Steuerventileinheit in der dritten Stellung ist, eine Temperatur der Batterie einen unteren Batterietemperaturschwellwert unterschreitet und die Klimaanlage zum Ausgeben eines gekühlten Luftstroms betrieben wird.

Es wird somit versucht, insbesondere den dritten Wärmeübertrager zu verwenden, sofern die Klimaanlage einen gekühlten Luftstrom erzeugt. Der Grund hierfür ist, dass der dritte Wärmeübertrager besonders wirkungsvoll von dem Luftstrom der Klimaanlage temperiert werden kann, da die Klimaanlage zum Temperieren eines gesamten Fahrzeuginnenraums entsprechend leistungsstark dimensioniert ist.

In einer weiteren Ausführungsvariante ist die Steuereinheit dazu ausgebildet, die Steuerventileinheit zum Einnehmen der ersten Stellung oder zum Verstellen in Richtung zu der ersten Stellung anzusteuern, wenn die Steuerventileinheit in der dritten Stellung ist, eine Temperatur der Batterie einen unteren Batterietemperaturschwellwert unterschreitet und die Klimaanlage ausgeschaltet ist oder zum Ausgeben eines erwärmten Luftstroms betrieben wird. Alternativ oder zusätzlich wird die Steuerventileinheit zum Einnehmen der ersten Stellung oder zum Verstellen in Richtung zu der ersten Stellung angesteuert, wenn die Steuerventileinheit in der zweiten Stellung oder einer Zwischenstellung zwischen der ersten Stellung und der zweiten Stellung ist und die Klimaanlage ausgeschaltet oder zum Ausgeben eines erwärmten Luftstroms umgeschaltet wird.

Wenn also der dritte Wärmeübertrager nicht effektiv zum Kühlen verwendet werden kann, da die Klimaanlage keinen gekühlten Luftstrom erzeugt, wird die Batterie (stärker) mit dem zweiten Wärmeübertrager gekühlt, sofern keine Kühlung durch den Kältekreislauf notwendig ist.

In einer weiteren Ausführungsform ist die Steuereinheit dazu ausgebildet, die Steuerventileinheit zum Einnehmen der dritten Stellung oder zum Verstellen in Richtung zu der dritten Stellung anzusteuern, wenn die Steuerventileinheit in der zweiten Stellung oder einer Zwischenstellung zwischen der ersten Stellung und der zweiten Stellung ist und eine Temperatur der Batterie einen oberen Batterietemperaturschwellwert überschreitet. Alternativ oder ergänzend wird die Steuerventileinheit zum Einnehmen der dritten Stellung oder zum Verstellen in Richtung zu der dritten Stellung angesteuert, wenn die Steuerventileinheit in der ersten Stellung ist, eine Temperatur der Batterie einen oberen Batterietemperaturschwellwert überschreitet und die Klimaanlage ausgeschaltet ist oder zum Ausgeben eines erwärmten Luftstroms betrieben wird.

Folglich wird der vierte Wärmeübertrager und somit der Kältekreislauf zugeschaltet, wenn der Kühlbedarf der Batterie nicht durch den zweiten Wärmeübertrager und/oder den dritten Wärmeübertrager gedeckt werden kann.

Es versteht sich, dass eine Temperatur der Batterie oberhalb des oberen Batterietemperaturschwellwerts zum Schutz der Batteriezellen zu verhindern ist. Weiterhin zeigt eine Temperatur der Batterie unterhalb des unteren Batterietemperaturschwellwerts an, dass ein Kühlbedarf der Batterie unter der aktuellen Kühlleistung liegt.

Es versteht sich zudem, dass bei einer Verstellung der Steuerventileinheit zu oder in Richtung zu der dritten Stellung zusätzlich der Kältekreislauf von der Steuereinheit eingeschaltet wird. Wird hingegen die Steuerventileinheit so verstellt, dass kein Kühlmittel zu dem vierten Wärmeübertrager geleitet wird, kann der Kältekreislauf von der Steuereinheit abgeschaltet werden.

Vorzugsweise ist die Vorrichtung in Modulbauweise mit einzelnen, miteinander verbundenen Modulen ausgebildet ist. Die Vorrichtung weist ein Batteriekühlungsmodul, das den zweiten und vierten Wärmeübertrager und den Kältekreislauf aufweist, ein Klimaanlagenmodul, das die Klimaanlage aufweist, und/oder ein Batteriemodul, das die Batterie und den ersten Wärmeübertrager aufweist, auf. Die Modulbauweise ermöglicht die Ausnutzung von Skaleneffekten in der Produktion. Hierbei kann insbesondere das Batteriekühlungsmodul ohne den dritten Wärmeübertrager ausgebildet werden. Das Batteriekühlungsmodul ist somit sowohl für Fahrzeuge mit Klimaanlagenmodul als auch ohne Klimaanlagenmodul verwendbar. Wird das Batteriekühlungsmodul an einem Fahrzeug mit Klimaanlagenmodul verwendet, so kann der dritte Wärmeübertrager zusätzlich in das System integriert werden.

In einem weiteren Ausführungsbeispiel sind das Batteriekühlungsmodul, das Batteriemodul und/oder das Klimaanlagenmodul als Aufdachmodule zur Montage auf einem Fahrzeugdach ausgebildet. Eine derartige Konfiguration wird insbesondere bei Nutzfahrzeugen und vorzugsweise bei Omnibussen verwendet. Sie ermöglicht einen flexiblen Aufbau des Fahrzeugs ohne, mit einigen oder mit allen Modulen.

Die Erfindung betrifft ferner ein Kraftfahrzeug, insbesondere Nutzfahrzeug, vorzugsweise Omnibus, das insbesondere als Hybridfahrzeug oder Elektrofahrzeug ausgebildet ist, wobei das Kraftfahrzeug die Vorrichtung wie hierin offenbart aufweist.

In einem besonders bevorzugten Ausführungsbeispiel ist der Strömungskanal und/oder der dritte Wärmeübertrager in einem Dachbereich, insbesondere einem Dachvoutenbereich, des Kraftfahrzeugs angeordnet. Insbesondere der Dachvoutenbereich von Omnibussen wird zur Verteilung des Luftstroms aus der Klimaanlage in den Fahrzeuginnenraum verwendet. Wenn somit der dritte Wärmeübertrager in diesem Dachvoutenbereich angeordnet ist, kann ein Wärmeaustausch zwischen dem dritten Wärmeübertrager und dem von der Klimaanlage temperierten Luftstrom besonders effektiv stattfinden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitenansicht eines schematisch dargestellten Omnibusses; und
- Figur 2: eine schematische Ansicht einer beispielhaft offenbarten Vorrichtung zum Temperieren einer Batterie.

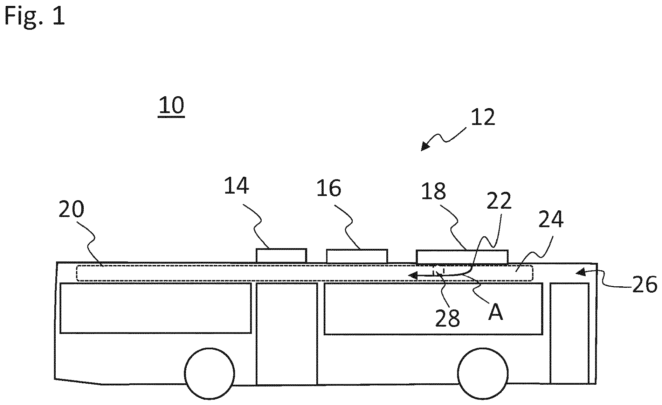

Die Figur 1 zeigt ein Fahrzeug 10, das beispielhaft als ein Omnibus dargestellt ist. Das Fahrzeug 10 ist ein Elektrofahrzeug oder ein Hybridfahrzeug. Das Fahrzeug 10 weist eine Vorrichtung 12 zur Kühlung einer Batterie, insbesondere einer Traktionsbatterie, auf. Die Vorrichtung 12 ist in Modulbauweise aufgebaut. Die Vorrichtung 12 weist ein Batteriemodul 14, ein Batteriekühlungsmodul 16 und ein Klimaanlagenmodul 18 auf. Das Batteriemodul 14, das Batteriekühlungsmodul 16 und das Klimaanlagenmodul 18 sind auf einem Dach 20 des Fahrzeugs 10 montiert. In einem Ausführungsbeispiel kann ein integriertes Batteriekühlungs-Batterie-Modul vorgesehen sein, d.h. ein Batteriekühlungsmodul, in dem die Batterie integriert ist.

Das Klimaanlagenmodul 18 weist eine Luftausströmungsöffnung 22 auf. Ein von der Klimaanlage des Klimaanlagenmoduls 18 gekühlter oder erwärmter Luftstrom A verlässt das Klimaanlagenmodul 18 durch die Luftausströmungsöffnung 22. Der Luftstrom A tritt in einen Strömungskanal 24 (einem Ausströmungskanal der Klimaanlage des Klimaanlagenmoduls 18) ein. Der Strömungskanal 24 ist in einem Dachbereich 26 des Fahrzeugs 10 angeordnet. Insbesondere verläuft der Strömungskanal 24 in einem sog. Dachvoutenbereich des Fahrzeugs 10 zum Verteilen des Luftstroms A in einen Fahrzeuginnenraum des Fahrzeugs 10.

Ein Wärmeübertrager 28, der mit dem Batteriekühlungsmodul 16 verbunden oder in diesem oder dem Klimaanlagenmodul 18 zumindest teilweise integriert ist, ist in dem Strömungskanal 24 angeordnet. Der Wärmeübertrager 28 kann immer dann vorgesehen werden, wenn das Fahrzeug 10 über das Klimaanlagenmodul 18 verfügt. Dies ermöglicht ein Temperieren der Batterie durch einen Wärmeaustausch zwischen dem Wärmeübertrager 28 und dem Luftstrom A.

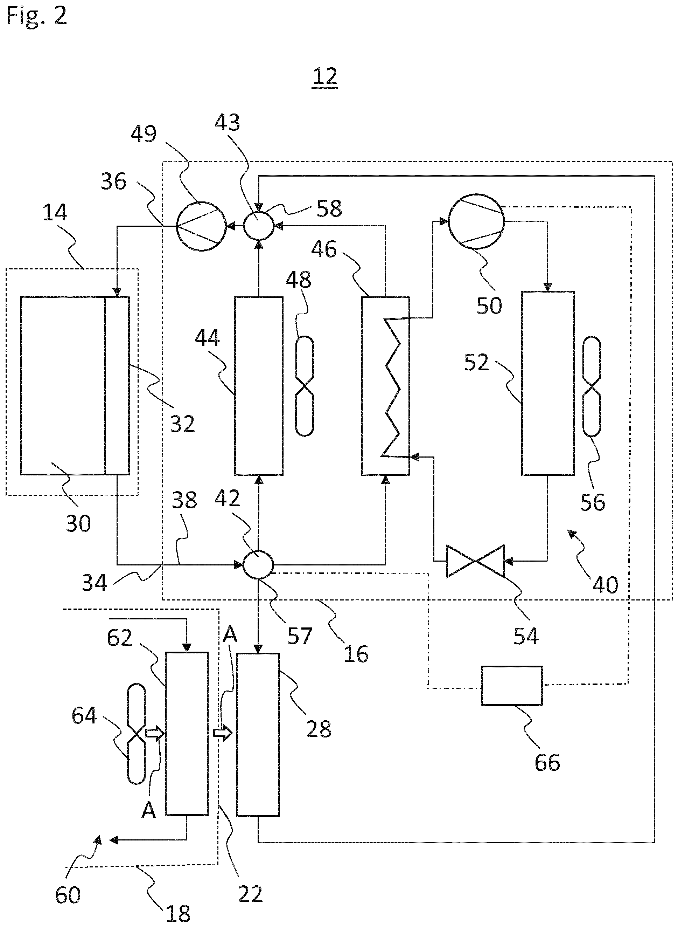

Wie nachfolgend unter Bezugnahme auf die Figur 2 im Detail beschrieben ist, ist das Batteriekühlungsmodul 16 bezüglich der Anbindung des Wärmeübertragers 28 flexibel aufgebaut. Mit anderen Worten gesagt, kann das Batteriekühlungsmodul 16 prinzipiell stets gleich aufgebaut sein für Ausführungsformen mit Klimaanlagenmodul 18 und ohne. Dies ermöglicht die Senkung von Produktionskosten durch Skaleneffekte. Wenn ein Klimaanlagenmodul 18 vorgesehen ist, so kann der Wärmeübertrager 28 an eigens dafür vorgesehenen Leitungsanschlüssen des Batteriekühlungsmoduls 16 angeschlossen werden. Wenn der Wärmeübertrager 28 installiert ist, ermöglicht dieser eine energiesparende und wirkungsvolle Kühlung der Batterie des Batteriemoduls 14. Wenn hingegen kein Klimaanlagenmodul 18 vorgesehen ist, wird kein Wärmeübertrager 28 installiert und mit dem Batteriekühlungsmodul 16 verbunden.

Die Figur 2 zeigt ein Ausführungsbeispiel der Vorrichtung 10 mit dem Batteriemodul 14, dem Batteriekühlungsmodul 16 und dem Klimaanlagenmodul 18. Das gezeigte Ausführungsbeispiel weist den Wärmeübertrager 28 als einen dritten Wärmeübertrager der Vorrichtung 10 auf.

Das Batteriemodul 14 weist eine Batterie 30 und einen ersten Wärmeübertrager 32 auf. Der erste Wärmeübertrager 32 ist mit der Batterie 30 zum Temperieren der Batterie 30 thermisch gekoppelt. Der erste Wärmeübertrager 32 ist mit einem Kühlmitteleinlass 34 und einem Kühlmittelauslass 36 des Batteriekühlungsmoduls 16 verbunden.

Das Batteriekühlungsmodul 16 weist einen Abschnitt eines Kühlkreislaufes 38 und einen Kältekreislauf 40 auf. Der Abschnitt des Kühlkreislaufes 38 des Batteriekühlungsmoduls 16 erstreckt sich zwischen dem Kühlmitteleinlass 34 und dem Kühlmittelauslass 36. Der Kühlkreislauf 38 wird durch den angeschlossenen ersten Wärmeübertrager 32 des Batteriemoduls 14 geschlossen. Der Kühlkreislauf 38 weist eine erste Steuerventileinheit 42 und eine zweite Steuerventileinheit 43 auf. Im gezeigten Ausführungsbeispiel sind die Steuerventileinheiten 42 und 43 4/3-Wegeventile, d.h. Ventile, die vier Anschlüsse und drei Stellungen aufweisen. Die Steuerventileinheiten 42, 43 können als Stetigventile, als Schaltventile oder als Kombinationen davon ausgebildet sein.

Die erste Steuerventileinheit 42 verzweigt den Kühlkreislauf 38 zu einem zweiten, luftgekühlten Wärmeübertrager 44, dem dritten, luftgekühlten Wärmeübertrager 28 und einem vierten Wärmeübertrager (Chiller) 46. Der zweite Wärmeübertrager 44, der dritte Wärmeübertrager 28 und der vierte Wärmeübertrager 46 sind im gezeigten Ausführungsbeispiel parallel geschaltet. Es sind allerdings auch Reihenschaltungen denkbar. Der zweite Wärmeübertrager 44 und der dritte Wärmeübertrager 28 können beispielsweise als Niedertemperatur-Kühler oder Radiatoren ausgebildet sein.

Die zweite Steuerventileinheit 43 vereinigt den Kühlkreislauf 38 ausgehend von dem zweiten Wärmeübertrager 44, dem dritten Wärmeübertrager 28 und dem vierten Wärmeübertrager 46 wieder.

In anderen Ausführungsbeispielen können beispielsweise mehrere Steuerventile in einer Steuerventileinheit vorgesehen sein, zum Beispiel zwei hintereinandergeschaltete 3/2-Wegeventile, d.h. Ventile, die drei Anschlüsse und zwei Stellungen aufweisen. Ein erstes 3/2-Wegeventil kann zur Verzweigung des Kühlkreislaufes 38 zum zweiten Wärmeübertrager 44 und zum dritten Wärmeübertrager 28 dienen. Ein zweites 3/2-Wegeventil kann stromabwärts des ersten 3/2-Wegeventils angeordnet sein und den Kühlkreislauf 38 zusätzlich zum vierten Wärmeübertrager 46 verzweigen.

Alternativ zu der zweiten Steuerventileinheit 43 kann beispielsweise auch eine Zusammenführung der jeweiligen Leitungsabschnitte von dem zweiten Wärmeübertrager 44, dem dritten Wärmeübertrager 28 und dem vierten Wärmeübertrager 46 vorgesehen werden. In die jeweiligen Leitungsabschnitte kann dann stromaufwärts von der Zusammenführung und stromabwärts des jeweiligen Wärmeübertragers ein Rückschlagventil eingebaut sein.

Ein Gebläse 48 ist dem zweiten, luftgekühlten Wärmeübertrager 42 zugeordnet. Der vierte Wärmeübertrager 46 koppelt den Kühlkreislauf 38 thermisch mit dem zuschaltbaren Kältekreislauf 40. Der Kühlkreislauf 38 weist zudem eine Kühlmittelpumpe 49 zum Pumpen des Kühlmittels auf. Der Kühlkreislauf 38 kann weitere Bauteile, die aus Gründen der Übersichtlichkeit nicht dargestellt sind, aufweisen, wie beispielsweise eine Heizung, ein Expansionsgefäß, weitere Ventile und Sensoren. Insbesondere kann der Kühlkreislauf 38 einen Temperatursensor aufweisen, der der Batterie 30 zugeordnet ist. Der Kühlkreislauf 38 ist als ein Niedertemperatur-Kühlkreislauf ausgebildet, d.h. ein Kühlkreislauf ohne Aggregatszustandsänderung des Kühlmittels.

Der Kältekreislauf 40 weist einen Verdichter 50, einen Kondensator 52 und ein Expansionsventil 54 auf. Der Kondensator 52 kann beispielsweise durch ein Gebläse 56 luftgekühlt sein. Der Kältekreislauf 40 wird immer dann zugeschaltet, wenn die Batterie 30 nicht genügend durch den zweiten Wärmeübertrager 44 und/oder den dritten Wärmeübertrager 46 gekühlt wird.

Der Kühlkreislauf 38 weist zusätzlich den dritten Wärmeübertrager 28 auf. Der dritte Wärmeübertrager 28 ist zwischen einem ersten Leitungsanschluss 57 und einem zweiten Leitungsanschluss 58 verbunden. Der erste Leitungsanschluss 57 ist als eine Leitungsverzweigung stromaufwärts von dem zweiten Wärmeübertrager 44 im Kühlkreislauf 38 angeordnet. In der gezeigten Ausführungsform dient die erste Steuerventileinheit 42 als der erste Leitungsanschluss 57. Der zweite Leitungsanschluss 58 ist als eine Leitungsverzweigung stromabwärts von dem zweiten Wärmeübertrager 44 angeordnet. In der gezeigten Ausführungsform dient die zweite Steuerventileinheit 43 als der zweite Leistungsanschluss 58.

Die Leitungsanschlüsse 57 und 58 ermöglichen eine flexible Anbindung des dritten Wärmeübertragers 28 an den Kühlkreislauf 38. Der Grund hierfür besteht darin, dass das Klimaanlagenmodul 18 als eine optional montierbare Komponente des Fahrzeugs 10 vorgesehen sein kann. Um eine modulare Bauweise zu ermöglichen, ist das Batteriekühlungsmodul 16 folglich so ausgestaltet, dass es eine Batteriekühlung der Batterie 30 auch dann ermöglicht, wenn keine Klimaanlage 60 verbaut ist. Im Einzelnen wird in diesem Fall kein dritter Wärmeübertrager 28 an den Leitungsanschlüssen 57 und 58 angeschlossen. Ist hingegen ein Klimaanlagenmodul 18 mit der Klimaanlage 60 montiert, so kann der dritte Wärmeübertrager 28 auf einfache Weise integriert werden. Im Einzelnen wird der dritte Wärmeübertrager 28 in diesem Fall an die Leitungsanschlüsse 57 und 58 angeschlossen.

Das Klimaanlagenmodul 18 weist eine Klimaanlage 60 mit einem fünften Wärmeübertrager 62 und einem Gebläse 64 sowie weiteren bekannten und daher nicht näher dargestellten Komponenten auf. Das Gebläse 64 ist dem fünften Wärmeübertrager 62 und dem dritten Wärmeübertrager 28 zugeordnet. Der von dem Gebläse 64 erzeugte Luftstrom A wird zunächst von dem fünften Wärmeübertrager 62 der Klimaanlage 60 temperiert. Der Luftstrom A strömt durch die Luftausströmungsöffnung 22 des Klimaanlagenmoduls 18 hinaus und erreicht den dritten Wärmeübertrager 28. Mit anderen Worten gesagt, ist der dritte Wärmeübertrager 28 stromabwärts von dem Gebläse 64 und dem fünften Wärmeübertrager 62 angeordnet. Zwischen dem Luftstrom A und dem dritten Wärmeübertrager 28 findet ein Wärmeaustausch statt, sodass das Kühlmittel zum Temperieren der Batterie 30 gekühlt werden kann. Somit kann die Klimaanlage 60 zum Kühlen der Batterie 30 verwendet werden.

Es versteht sich, dass prinzipiell auch eine Erwärmung des Kühlmittels im dritten Wärmeübertrager 28 durch den Luftstrom A erfolgen kann, wenn ein erwärmter Luftstrom A ausgegeben wird. Dies kann beispielsweise an sehr kalten Tagen zum (Vor-) Wärmen der Batterie 30 verwendet werden. Allerdings besteht auch die Möglichkeit, dass, wenn ein erwärmter Luftstrom A ausgegeben wird und eine Kühlung der Batterie 30 erforderlich ist, das Kühlmittel aus dem Kühlkreislauf 38 nicht zu dem dritten Wärmeübertrager 28 geleitet wird. Stattdessen kann das Kühlmittel zu dem zweiten Wärmeübertrager 44 und/oder dem vierten Wärmeübertrager 46 geleitet werden.

Zum Steuern der Vorrichtung 10 ist eine Steuereinheit 66 vorgesehen. Die Steuereinheit 66 kann in dem Batteriekühlungsmodul 18 oder anderweitig angeordnet sein. Die Steuereinheit 66 ist elektronisch mit der ersten Steuerventileinheit 42 und dem Verdichter 50 verbunden. Die Steuereinheit 66 ist ferner mit weiteren Komponenten, wie beispielsweise Sensoren, verbunden. Zum Beispiel kann die Steuereinheit 66 mit dem Temperatursensor der Batterie 30 oder anderen Temperatursensoren im Kühlkreislauf 38 verbunden sein.

Die Steuereinheit 66 kann die Vorrichtung 12 wie folgt steuern. Die Steuereinheit 66 kann die Steuerventileinheit 42 so ansteuern, dass die Steuerventileinheit 42 verschiedene Stellungen einnimmt, sodass Kühlmittel zu dem zweiten Wärmeübertrager 44, dem dritten Wärmeübertrager 28 und/oder dem vierten Wärmeübertrager 46 geleitet wird. Es sind verschiedene Steuerungsstrategien implementierbar. Zum Beispiel kann die Steuerventileinheit 42 das Kühlmittel zu dem dritten Wärmeübertrager 28 leiten, wenn die Klimaanlage 60 zum Kühlen eingeschaltet ist und eine Temperatur der Batterie 30 unter einem oberen Batterietemperaturschwellwert ist. Übersteigt die Temperatur der Batterie 30 den oberen Batterietemperaturschwellwert, so kann die Steuerventileinheit 42 das Kühlmittel zu dem vierten Wärmeübertrager 48 leiten. Gleichzeitig kann die Steuereinheit 66 den Verdichter 50 und somit den Kältekreislauf 40 einschalten. Unterschreitet die Temperatur der Batterie 30 nachfolgend einen unteren Temperaturschwellwert, so kann der Kältekreislauf 40 wieder abgeschaltet werden und die Steuerventileinheit 42 das Kühlmittel wieder zu dem dritten Wärmeübertrager 28 leiten.

Es ist auch denkbar, dass die Steuerventileinheit 42 das Kühlmittel gleichzeitig zu mehreren Wärmeübertragern leitet. Zum Beispiel kann Steuerventileinheit 42 das Kühlmittel zu dem zweiten und dritten Wärmeübertrager 44, 28 leiten, wenn diese den Kühlbedarf der Batterie 30 gemeinsam decken können. Andererseits kann die Steuerventileinheit 42 das Kühlmittel vollständig zu dem ersten Wärmeübertrager 44 leiten, wenn der zweite Wärmeübertrager 44 den Kühlbedarf der Batterie 30 alleine decken kann und/oder der dritte Wärmeübertrager 28 im Wärmeaustausch mit einem erwärmten Luftstrom A steht. Die Steuerventileinheit 42 kann das Kühlmittel auch vollständig zu dem dritten Wärmeübertrager 28 leiten, wenn dieser den Kühlbedarf der Batterie 30 alleine decken kann. In einigen Ausführungsformen besteht zusätzlich die Möglichkeit, dass die Steuerventileinheit 42 das Kühlmittel gleichzeitig zum zweiten Wärmeübertrager 44, zum dritten Wärmeübertrager 28 und zum vierten Wärmeübertrager 46 leitet, wobei zum vierten Wärmeübertrager 46 nur so viel geleitet wird, dass der Kühlbedarf der Batterie 30 ausreichend gedeckt werden kann.

Fachleute werden verstehen, dass durch den Einbau des dritten Wärmeübertragers 28 eine energiesparende und wirkungsvolle Kühlung der Batterie 30 ermöglicht wird. Diese Kühlung durch den von der Klimaanlage 60 erzeugten Luftstrom A ist in aller Regel wirkungsvoller als eine Kühlung durch den zweiten Wärmeübertrager 44 und das Gebläse 46. Die Kühlung mit dem dritten Wärmeübertrager 28 spart zudem Energie gegenüber dem Betrieb des Kältekreislaufs 40. Mit anderen Worten gesagt, erlaubt die Integration des dritten Wärmeübertragers 28, dass der Kältekreislauf 40 im Vergleich zu einer Ausführungsform ohne den dritten Wärmeübertrager 28 später zugeschaltet wird. Dies schont zudem die Komponenten des Kältekreislaufes 40 und kann gegebenenfalls den Einbau von weniger aufwendigen Komponenten im Kältekreislauf 40 ermöglichen.

Da das Batteriekühlungsmodul 18 die Leitungsanschlüsse 57 und 58 aufweist, kann der Wärmeübertrager 28 prinzipiell auch in Ausführungsformen nachgerüstet werden, in denen der Wärmeübertrager 28 zunächst nicht vorgesehen war. Dies kann beispielsweise immer dann sinnvoll sein, wenn beim Fahrzeug 10 (siehe Figur 1) ein Klimaanlagenmodul 18 nachgerüstet wird.

Prinzipiell sind ebenso Ausführungsformen denkbar, in denen das Batteriekühlungsmodul 18 ohne den Kältekreislauf 40 vorgesehen ist, da die von dem zweiten und dritten Wärmeübertrager 44, 28 erzeugte Kühlleistung zur Kühlung der Batterie 30 ausreichend ist.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- A: Luftströmung
- 10: Fahrzeug (Omnibus)
- 12: Vorrichtung zum Kühlen der Batterie
- 14: Batteriemodul
- 16: Batteriekühlungsmodul
- 18: Klimaanlagenmodul
- 20: Dach
- 22: Luftausströmungsöffnung
- 24: Strömungskanal
- 26: Dachbereich
- 28: Dritter Wärmeübertrager
- 30: Batterie
- 32: Erster Wärmeübertrager
- 34: Kühlmitteleingang
- 36: Kühlmittelausgang
- 38: Kühlkreislauf
- 40: Kältekreislauf
- 42: Steuerventileinheit
- 43: Steuerventileinheit
- 44: Zweiter Wärmeübertrager
- 46: Vierter Wärmeübertrager
- 48: Gebläse
- 50: Verdichter
- 52: Kondensator
- 54: Expansionsventil
- 56: Gebläse
- 57: Erster Leitungsanschluss
- 58: Zweiter Leitungsanschluss
- 60: Klimaanlage
- 62: Fünfter Wärmeübertrager
- 64: Gebläse
- 66: Steuereinheit

## Patentansprüche

1. Vorrichtung (12) zum Temperieren einer Batterie (30) eines Kraftfahrzeugs (10), insbesondere einer Traktionsbatterie eines Hybridfahrzeugs oder eines Elektrofahrzeugs, aufweisend:
- eine Klimaanlage (60) zum Erzeugen eines temperierten Luftstroms (A) zum Temperieren eines Fahrzeuginnenraums des Kraftfahrzeugs (10); und
- einen Kühlkreislauf (38) mit:
- einem ersten Wärmeübertrager (32) zum Wärmeaustausch mit der Batterie (30);
- einem zweiten Wärmeübertrager (44), der zum Wärmeaustauch mit einer Umgebung der Vorrichtung (12) angeordnet ist; und
- einem dritten Wärmeübertrager (28), der zum Wärmeaustausch mit dem temperierten Luftstrom (A) angeordnet ist.

2. Vorrichtung (12) nach Anspruch 1 ferner aufweisend:
- einen Kältekreislauf (40), der insbesondere separat von der Klimaanlage (60) des Kraftfahrzeugs (10) vorgesehen ist und vorzugsweise einen Verdichter (50), einen Kondensator (52) und/oder ein Expansionsventil (54) aufweist; und
- einen vierten Wärmeübertrager (46), der den Kältekreislauf (52) und den Kühlkreislauf (38) thermisch miteinander koppelt.

3. Vorrichtung (12) nach Anspruch 2, wobei der zweite Wärmeübertrager (44), der dritte Wärmeübertrager (28) und/oder der vierte Wärmeübertrager (46) parallel zueinander geschaltet sind.

4. Vorrichtung (12) nach einem der vorherigen Ansprüche, wobei:
der zweite Wärmeübertrager (44) und/oder der dritte Wärmeübertrager (28) als ein Niedertemperatur-Kühler oder ein Radiator ausgebildet ist, und/oder
der zweite Wärmeübertrager (44) und/oder der dritte Wärmeübertrager (28) ein luftgekühlter Wärmeübertrager ist.

5. Vorrichtung (12) nach einem der vorherigen Ansprüche, ferner aufweisend einen Strömungskanal (24) zum Führen des temperierten Luftstroms (A), der mit einer Ausströmungsöffnung (22) der Klimaanlage (60) verbunden ist, wobei der dritte Wärmeübertrager (28) in dem Strömungskanal (24) angeordnet ist.

6. Vorrichtung (12) nach einem der vorherigen Ansprüche, wobei der Kühlkreislauf (38) ein Niedertemperatur-Kühlkreislauf ohne Aggregatzustandsänderung eines in dem Kühlkreislauf (38) geführten Kühlmittels ist.

7. Vorrichtung (12) nach Anspruch 2 oder 3 oder einem der Ansprüche 4 bis 6, wenn abhängig vom Anspruch 2, wobei:
der Kühlkreislauf eine Steuerventileinheit (42) aufweist, insbesondere ein 4/3-Wegeventil oder zwei in Reihe geschaltete 3/2-Wegeventile, wobei die Steuerventileinheit (42) in einer ersten Stellung einen Kühlmittelstrom vollständig zu dem zweiten Wärmeübertrager (44) leitet, in einer zweiten Stellung einen Kühlmittelstrom vollständig zu dem dritten Wärmeübertrager (28) leitet und in einer dritten Stellung einen Kühlmittelstrom vollständig zu dem vierten Wärmeübertrager (46) leitet; und/oder
die Vorrichtung (21) eine Steuereinheit (66) aufweist, die dazu ausgebildet ist, den Kältekreislauf (40) einzuschalten und auszuschalten.

8. Vorrichtung (12) nach Anspruch 7, wobei die Steuerventileinheit (42) als Schaltventileinheit mit diskreter Verstellung zwischen den Stellungen, als Stetigventileinheit mit kontinuierlicher Verstellung zwischen den Stellungen oder als kombinierte Schaltventil- und Stetigventileinheit ausgebildet ist.

9. Vorrichtung (12) nach Anspruch 7 oder Anspruch 8, wobei die Steuereinheit (66), dazu ausgebildet ist, die Steuerventileinheit (42) zum Einnehmen der zweiten Stellung oder zum Verstellen in Richtung zu der zweiten Stellung anzusteuern, wenn:
- die Steuerventileinheit (42) in der ersten Stellung ist und die Klimaanlage (60) zum Ausgeben eines gekühlten Luftstroms (A) eingeschaltet oder umgeschaltet wird; und/oder
- die Steuerventileinheit (42) in der dritten Stellung ist, eine Temperatur der Batterie (30) einen unteren Batterietemperaturschwellwert unterschreitet und die Klimaanlage (60) zum Ausgeben eines gekühlten Luftstroms (A) betrieben wird.

10. Vorrichtung (12) nach einem der Ansprüche 7 bis 9, wobei die Steuereinheit (66), dazu ausgebildet ist, die Steuerventileinheit (42) zum Einnehmen der ersten Stellung oder zum Verstellen in Richtung zu der ersten Stellung anzusteuern, wenn:
- die Steuerventileinheit (42) in der dritten Stellung ist, eine Temperatur der Batterie (30) einen unteren Batterietemperaturschwellwert unterschreitet und die Klimaanlage (60) ausgeschaltet ist oder zum Ausgeben eines erwärmten Luftstroms (A) betrieben wird; und/oder
- die Steuerventileinheit (42) in der zweiten Stellung oder einer Zwischenstellung zwischen der ersten Stellung und der zweiten Stellung ist und die Klimaanlage (60) ausgeschaltet oder zum Ausgeben eines erwärmten Luftstroms (A) umgeschaltet wird.

11. Vorrichtung (12) nach einem der Ansprüche 7 bis 10, wobei die Steuereinheit (66), dazu ausgebildet ist, die Steuerventileinheit (42) zum Einnehmen der dritten Stellung oder zum Verstellen in Richtung zu der dritten Stellung anzusteuern, wenn:
- die Steuerventileinheit (42) in der zweiten Stellung oder einer Zwischenstellung zwischen der ersten Stellung und der zweiten Stellung ist und eine Temperatur der Batterie (30) einen oberen Batterietemperaturschwellwert überschreitet; und/oder
- die Steuerventileinheit (42) in der ersten Stellung ist, eine Temperatur der Batterie (30) einen oberen Batterietemperaturschwellwert überschreitet und die Klimaanlage (60) ausgeschaltet ist oder zum Ausgeben eines erwärmten Luftstroms (A) betrieben wird.

12. Vorrichtung (12) nach einem der vorherigen Ansprüche, wobei die Vorrichtung (12) in Modulbauweise mit einzelnen, miteinander verbundenen Modulen ausgebildet ist, aufweisend:
ein Batteriekühlungsmodul (16), das den zweiten Wärmeübertrager (44), den vierten Wärmeübertrager (46) und den Kältekreislauf (40) aufweist; und/oder
ein Klimaanlagenmodul (18), das die Klimaanlage (60) aufweist; und/oder
ein Batteriemodul (14), das die Batterie (30) und den ersten Wärmeübertrager (46) aufweist.

13. Vorrichtung (12) nach Anspruch 12, wobei das Batteriekühlungsmodul (16), das Batteriemodul (14) und/oder das Klimaanlagenmodul (18) als Aufdachmodule zur Montage auf einem Fahrzeugdach (20) ausgebildet sind.

14. Kraftfahrzeug (10), insbesondere Nutzfahrzeug, vorzugsweise Omnibus, das insbesondere als Hybridfahrzeug oder Elektrofahrzeug ausgebildet ist, wobei das Kraftfahrzeug (10) die Vorrichtung (12) nach einem der Ansprüche 1 bis 13 aufweist.

15. Kraftfahrzeug (10) nach Anspruch 14, wobei der Strömungskanal (24) und/oder der dritte Wärmetauscher (28) in einem Dachbereich (26), insbesondere einem Dachvoutenbereich, des Kraftfahrzeugs (10) angeordnet sind.

## Claims

1. A device (12) for controlling the temperature of a battery (30) of a motor vehicle (10), in particular a traction battery of a hybrid vehicle or an electric vehicle, comprising:
- an air-conditioning system (60) for producing a temperature-controlled air stream (A) for controlling the temperature of an interior vehicle space of the motor vehicle (10); and
- a cooling circuit (38) with:
- a first heat exchanger (32) for exchanging heat with the battery (30);
- a second heat exchanger (44), which is arranged for exchanging heat with a surrounding area of the device (12); and
- a third heat exchanger (28), which is arranged for exchanging heat with the temperature-controlled air stream (A).

2. The device (12) according to Claim 1, also comprising:
- a refrigerating circuit (40), which is in particular provided separately from the air-conditioning system (60) of the motor vehicle (10) and preferably comprises a compressor (50), a condenser (52) and/or an expansion valve (54); and
- a fourth heat exchanger (46), which thermally couples the refrigerating circuit (52) and the cooling circuit (38) to one another.

3. The device (12) according to Claim 2, wherein the second heat exchanger (44), the third heat exchanger (28) and/or the fourth heat exchanger (46) are connected parallel to one another.

4. The device (12) according to one of the preceding claims, wherein:
the second heat exchanger (44) and/or the third heat exchanger (28) is formed as a low-temperature cooler or a radiator, and/or
the second heat exchanger (44) and/or the third heat exchanger (28) is an air-cooled heat exchanger.

5. The device (12) according to one of the preceding claims, also comprising a flow channel (24) for carrying the temperature-controlled air stream (A), which is connected to an outflow opening (22) of the air-conditioning system (60), wherein the third heat exchanger (28) is arranged in the flow channel (24).

6. The device (12) according to one of the preceding claims, wherein the cooling circuit (38) is a low-temperature cooling circuit without changing the state of aggregation of a coolant carried in the cooling circuit (38).

7. The device (12) according to Claim 2 or 3 or one of Claims 4 to 6, if dependent on Claim 2, wherein:
the cooling circuit comprises a control-valve unit (42), in particular a 4/3-way valve or two 3/2-way valves connected in series, wherein the control-valve unit (42) in a first position conducts a coolant stream completely to the second heat exchanger (44), in a second position conducts a coolant stream completely to the third heat exchanger (28) and in a third position conducts a coolant stream completely to the fourth heat exchanger (46); and/or
the device (21) comprises a control unit (66), which is designed to switch the refrigerating circuit (40) on and off.

8. The device (12) according to Claim 7, wherein the control-valve unit (42) is designed as a switching-valve unit with discrete adjustment between the positions, as a continuously-operated-valve unit with continuous adjustment between the positions or as a combined switching-valve and continuously-operated-valve unit.

9. The device (12) according to Claim 7 or 8, wherein the control unit (66) is designed to activate the control-valve unit (42) for assuming the second position or for adjusting in the direction of the second position if:
- the control-valve unit (42) is in the first position and the air-conditioning system (60) is switched on or switched over for outputting a cooled air stream (A); and/or
- the control-valve unit (42) is in the third position, a temperature of the battery (30) goes below a lower battery-temperature threshold value and the air-conditioning system (60) is operated for outputting a cooled air stream (A).

10. The device (12) according to one of Claims 7 to 9, wherein the control unit (66) is designed to activate the control-valve unit (42) for assuming the first position or for adjusting in the direction of the first position if:
- the control-valve unit (42) is in the third position, a temperature of the battery (30) goes below a lower battery-temperature threshold value and the air-conditioning system (60) is switched off or is operated for outputting a heated air stream (A); and/or
- the control-valve unit (42) is in the second position or an intermediate position between the first position and the second position and the air-conditioning system (60) is switched off or is switched over for outputting a heated air stream (A) .

11. The device (12) according to one of Claims 7 to 10, wherein the control unit (66) is designed to activate the control-valve unit (42) for assuming the third position or for adjusting in the direction of the third position if:
- the control-valve unit (42) is in the second position or an intermediate position between the first position and the second position and a temperature of the battery (30) goes above an upper battery-temperature threshold value; and/or
- the control-valve unit (42) is in the first position, a temperature of the battery (30) goes above an upper battery-temperature threshold value and the air-conditioning system (60) is switched off or is operated for outputting a heated air stream (A).

12. The device (12) according to one of the preceding claims, wherein the device (12) is designed in a modular type of construction with individual modules connected to one another, comprising:
a battery-cooling module (16), which comprises the second heat exchanger (44), the fourth heat exchanger (46) and the refrigerating circuit (40); and/or
an air-conditioning system module (18), which comprises the air-conditioning system (60); and/or
a battery module (14), which comprises the battery (30) and the first heat exchanger (46).

13. The device (12) according to Claim 12, wherein the battery-cooling module (16), the battery module (14) and/or the air-conditioning system module (18) are designed as roof-mounted modules for mounting on a vehicle roof (20).

14. A motor vehicle (10), in particular a commercial vehicle, preferably an omnibus, which is designed in particular as a hybrid vehicle or electric vehicle, wherein the motor vehicle (10) comprises the device (12) according to one of Claims 1 to 13.

15. The motor vehicle (10) according to Claim 14, wherein the flow channel (24) and/or the third heat exchanger (28) is arranged in a roof area (26), in particular a roof cove area, of the motor vehicle (10).

## Revendications

1. Dispositif (12) de régulation de la température d'une batterie (30) d'un véhicule automobile (10), notamment d'une batterie de traction d'un véhicule hybride ou d'un véhicule électrique, ledit dispositif comportant :
- un système de climatisation (60) destiné à générer un flux d'air (A) régulé en température et destiné à réguler la température d'un espace intérieur du véhicule automobile (10) ; et
- un circuit de refroidissement (38) comprenant :
- un premier échangeur de chaleur (32) destiné à échanger de la chaleur avec la batterie (30) ;
- un deuxième échangeur de chaleur (44) qui est disposé de manière à échanger de la chaleur avec un environnement du dispositif (12) ; et
- un troisième échangeur de chaleur (28) qui est disposé de manière à échanger de la chaleur avec le flux d'air (A) régulé en température.

2. Dispositif (12) selon la revendication 1 comportant en outre :
- un circuit de réfrigération (40) qui est prévu notamment séparément du système de climatisation (60) du véhicule automobile (10) et qui comporte de préférence un compresseur (50), un condenseur (52) et/ou un détendeur (54) ; et
- un quatrième échangeur de chaleur (46) qui couple thermiquement le circuit de réfrigération (52) et le circuit de refroidissement (38) l'un à l'autre.

3. Dispositif (12) selon la revendication 2, le deuxième échangeur de chaleur (44), le troisième échangeur de chaleur (28) et/ou le quatrième échangeur de chaleur (46) étant montés parallèlement l'un à l'autre.

4. Dispositif (12) selon l'une des revendications précédentes :
le deuxième échangeur de chaleur (44) et/ou le troisième échangeur de chaleur (28) étant réalisé sous la forme d'un refroidisseur à basse température ou d'un radiateur, et/ou le deuxième échangeur de chaleur (44) et/ou le troisième échangeur de chaleur (28) étant un échangeur de chaleur refroidi par air.

5. Dispositif (12) selon l'une des revendications précédentes, comportant en outre un canal d'écoulement (24) destiné à guider le flux d'air (A), régulé en température, qui est relié à une ouverture d'écoulement de sortie (22) du système de climatisation (60), le troisième échangeur de chaleur (28) étant disposé dans le canal d'écoulement (24).

6. Dispositif (12) selon l'une des revendications précédentes, le circuit de refroidissement (38) étant un circuit de refroidissement à basse température sans changement d'état physique d'un agent de refroidissement guidé dans le circuit de refroidissement (38).

7. Dispositif (12) selon la revendication 2 ou 3 ou l'une des revendications 4 à 6 lorsqu'elles dépendent de la revendication 2 :
le circuit de refroidissement comportant une unité de soupape de commande (42), notamment un distributeur 4/3 voies ou deux distributeurs 3/2 voies montés en série, l'unité de soupape de commande (42) amenant dans une première position un flux d'agent de refroidissement entièrement au deuxième échangeur de chaleur (44), dans une deuxième position un flux d'agent de refroidissement entièrement au troisième échangeur de chaleur (28) et dans une troisième position un flux d'agent de refroidissement entièrement au quatrième échangeur de chaleur (46) ; et/ou
le dispositif (21) comportant une unité de commande (66) qui est conçue pour activer et désactiver le circuit de réfrigération (40).

8. Dispositif (12) selon la revendication 7, l'unité de soupape de commande (42) étant conçue comme une unité de soupape de commutation à déplacement discret entre les positions, comme une unité de soupape stable à déplacement continu entre les positions ou comme une unité combinée de soupape de commutation et de soupape stable.

9. Dispositif (12) selon la revendication 7 ou la revendication 8, l'unité de commande (66) étant conçue pour commander l'unité de soupape de commande (42) pour qu'elle occupe la deuxième position ou pour qu'elle se déplace en direction de la deuxième position lorsque :
- l'unité de soupape de commande (42) est dans la première position et le système de climatisation (60) est activé ou commuté pour délivrer un flux d'air refroidi (A) ; et/ou
- l'unité de soupape de commande (42) est dans la troisième position, une température de la batterie (30) passe au-dessous d'une valeur seuil de température de batterie inférieure et le système de climatisation (60) est mis en fonctionnement pour délivrer un flux d'air refroidi (A).

10. Dispositif (12) selon l'une des revendications 7 à 9, l'unité de commande (66) étant conçue pour commander l'unité de soupape de commande (42) pour qu'elle occupe la première position ou pour qu'elle se déplace en direction de la première position lorsque :
- l'unité de soupape de commande (42) est dans la troisième position, une température de la batterie (30) passe au-dessous d'une valeur seuil de température de batterie inférieure et le système de climatisation (60) est désactivé ou est mis en fonctionnement pour délivrer un flux d'air chauffé (A) ; et/ou
- l'unité de soupape de commande (42) est dans la deuxième position ou une position intermédiaire entre la première position et la deuxième position et le système de climatisation (60) est désactivé ou commuté pour délivrer un flux d'air chauffé (A).

11. Dispositif (12) selon l'une des revendications 7 à 10, l'unité de commande (66) étant conçue pour commander l'unité de soupape de commande (42) pour qu'elle occupe la troisième position ou pour qu'elle se déplace en direction de la troisième position lorsque :
- l'unité de soupape de commande (42) est dans la deuxième position ou une position intermédiaire entre la première position et la deuxième position et une température de la batterie (30) passe au-dessus d'une valeur seuil de température de batterie supérieure ; et/ou
- l'unité de soupape de commande (42) est dans la première position, une température de la batterie (30) passe au-dessus d'une valeur seuil de température de batterie supérieure et le système de climatisation (60) est désactivé ou est mis en fonctionnement pour délivrer un flux d'air chauffé (A).

12. Dispositif (12) selon l'une des revendications précédentes, le dispositif (12) étant conçu de manière modulaire avec des modules individuels reliés entre eux, ledit dispositif comportant :
un module de refroidissement de batterie (16) qui comporte le deuxième échangeur de chaleur (44), le quatrième échangeur de chaleur (46) et le circuit de réfrigération (40) ; et/ou
un module de système de climatisation (18) qui comporte le système de climatisation (60) ; et/ou un module de batterie (14) qui comporte la batterie (30) et le premier échangeur de chaleur (46).

13. Dispositif (12) selon la revendication 12, le module de refroidissement de batterie (16), le module de batterie (14) et/ou le module de climatisation (18) étant conçus comme des modules de dessus de toit destiné à être monté sur un toit de véhicule (20).

14. Véhicule automobile (10), notamment véhicule utilitaire, de préférence un omnibus, qui est notamment conçu comme un véhicule hybride ou un véhicule électrique, le véhicule automobile (10) comportant le dispositif (12) selon l'une des revendications 1 à 13.

15. Véhicule automobile (10) selon la revendication 14, le canal d'écoulement (24) et/ou le troisième échangeur de chaleur (28) étant disposés dans une zone de toit (26), notamment une zone de voûte de toit, du véhicule automobile (10).
